# EUROPEAN PATENT APPLICATION

(11) **EP 2 685 452 A1**
(43) Date of publication of application: **15.01.2014**
(21) Application number: 13174723.0
(22) Date of filing: 02.07.2013
(51) Int. Cl.: G10L 15/14, G10L 15/05

(54) **Method of recognizing speech and electronic device thereof**

(30) Priority: 13.07.2012 KR 20120076809
(71) Applicant: Samsung Electronics Co., Ltd, Gyeonggi-do 443-742 (KR); Korea University Research and Business Foundation, Seoul 136-713 (KR)
(72) Inventor: Lee, Jae-won, Seoul (KR); Yook, Dong-suk, Seoul (KR); Lim, Hyeon-taek, Seoul (KR); Kim, Tae-yoon, Seoul (KR)
(74) Representative: Brandon, Paul Laurence

(57) **Abstract**

A method of recognizing a speech and an electronic device thereof are provided. The method includes: segmenting a speech signal into a plurality of sections at preset time intervals; performing a phoneme recognition with respect to one of the plurality of sections of the speech signal by using a first acoustic model; extracting a candidate word of the one of the plurality of sections of the speech signal by using the phoneme recognition result; and performing a speech recognition with respect to the one the plurality of sections the speech signal by using the candidate word.

## Description

### CROSS-REFERENCE TO RELATED APPLICATION(S)

This application claims priority from Korean Patent Application No. 10-2012-0076809, filed on July 13, 2012, in the Korean Intellectual Property Office, the disclosure of which is incorporated herein by reference in its entirety.

### BACKGROUND

### 1. Field

Methods and apparatuses consistent with the exemplary embodiments generally relate to recognizing speech, and more particularly, to recognizing speech uttered by a user by using an acoustic model, a language model, and a pronunciation dictionary.

### 2. Description of the Related Art

Speech recognition is controlled by using an electronic device such as a smart phone, a navigation system, or the like. As performance of hardware of electronic devices has improved and user demand level for speech recognition has increased, a user environment has been changed from an isolated word recognition method of recognizing a user's speech with dozens of existing commands to a continuous speech recognition method of recognizing a plurality of natural languages.

The continuous speech recognition method recognizes a word string including at least one word out of hundreds of thousands to millions of words, and forms a search space for all available words. The continuous speech recognition method calculates a probability by using information including the acoustic model, the language model, and the pronunciation dictionary in order to determine whether a corresponding utterance is a type of a sentence, and acquires the recognized sentence according to the calculation result.

However, in the continuous speech recognition method, the search space becomes greater, and thus a memory requirement increases. Speech recognition is impossible or may be considerably lowered due to the increase in the number of calculations.

Accordingly, a speech recognition method which rapidly recognizes a plurality of natural languages is required.

### SUMMARY

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a speech recognition method of further rapidly recognizing a plurality of natural languages, and an electronic device thereof.

According to an aspect of an exemplary embodiments, there is provided a method of recognizing speech in an electronic device. The method may comprise: segmenting a speech signal into a plurality of sections at preset time intervals; performing a phoneme recognition with respect to one of the plurality of sections of the speech signal based on a first acoustic model; extracting a candidate word of the one of the plurality of sections of the speech signal based on a result of the phoneme recognition; and performing speech recognition with respect to the one of the plurality of sections based on the candidate word.

The performance of the phoneme recognition may further comprise: deleting at least one last phoneme of a plurality of phonemes of the one of the plurality of sections of the speech signal based on a segmented viterbi algorithm. The at least one deleted phoneme may be used to perform a phoneme recognition with respect to a next section of the speech signal following the one of the plurality of sections.

The extraction may comprise: extracting a similar phoneme pronounced similarly to the recognized phoneme; and generating a word graph for extracting the candidate word of the one of the plurality of sections based on the recognized phoneme and the similar phoneme.

The performing of the speech recognition may further comprise: calculating a Gaussian probability of the speech signal of the one of the plurality of sections based on a second acoustic model; and outputting a word string having a highest probability in the word graph based on the second acoustic model and a language model.

The first and second acoustic models may be different from each other.

The performance of the phoneme recognition, the extraction, and the performance of the speech recognition may be performed in parallel through different cores.

According to an aspect of another exemplary embodiment, there is provided an electronic device comprising: a speech signal input part configured to receive a speech signal; a speech signal segmenter configured to segment the speech signal input through the speech signal input part into a plurality of sections at preset time intervals; a phoneme recognizer configured to perform a phoneme recognition with respect to one of the plurality of sections of the speech signal based on a first acoustic model; a candidate word extractor configured to extract a candidate word of the one of the plurality of sections of the speech signal based on a result of the phoneme recognition; and a speech recognizer configured to perform speech recognition with respect to the one of the plurality of sections based on the candidate word.

The phoneme recognizer is configured to delete at least one last phoneme of a plurality of phonemes of the one of the plurality of sections of the speech signal based on a segmented viterbi algorithm to perform the phoneme recognition. The at least one deleted phoneme may be used to perform a phoneme recognition with respect to a next section of the speech signal following the one of the plurality of sections.

The candidate word extractor is configured to extract a similar phoneme pronounced similarly to the recognized phoneme and generate a word graph for extracting a candidate word of the one of the plurality of sections based on the recognized phoneme and the similar phoneme.

The speech recognizer is configured to calculate a Gaussian probability of the speech signal of the one of the plurality of sections based on a second acoustic model and output a word string having a highest probability in the word graph based on the second acoustic model and a language model to perform the speech recognition.

The first acoustic model of the phoneme recognizer and the second acoustic model of the speech recognizer may be different from each other.

The phoneme recognizer, the candidate word extractor, and the speech recognizer may be realized as different cores of the electronic device.

### BRIEF DESCRIPTION OF THE DRAWINGS

The above and/or other aspects will be more apparent by describing certain exemplary embodiments with reference to the accompanying drawings, in which:

FIG. 1 is a schematic block diagram illustrating a structure of an electronic device for performing speech recognition according to an exemplary embodiment;

FIG. 2 is a block diagram illustrating a detailed structure of the electronic device of FIG. 1 for recognizing speech according to an exemplary embodiment;

FIG. 3 is a view illustrating a method of processing parallel speech recognition according to an exemplary embodiment; and

FIG. 4 is a flowchart illustrating a method of recognizing speech according to an exemplary embodiment.

### DETAILED DESCRIPTION OF EXEMPLARY EMBODIMENTS

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

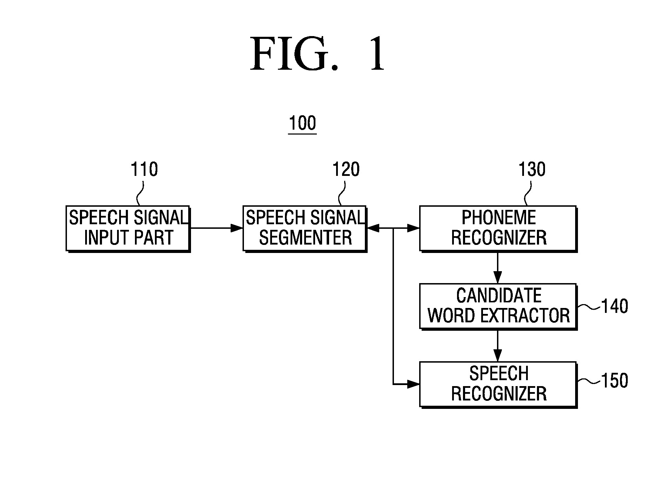

FIG. 1 is a schematic block diagram illustrating a structure of an electronic device 100 for performing speech recognition according to an exemplary embodiment. Referring to FIG. 1, the electronic device 100 includes a speech signal input part 110, a speech signal segmenter 120, a phoneme recognizer 130, a candidate word extractor 140, and a speech recognizer 150. The electronic device 100 according to the present exemplary embodiment may be realized as various types of electronic devices such as a smart phone, a smart television (TV), a desktop personal computer (PC), a tablet PC, etc. Accordingly, the above-noted elements of the electronic device may take the form of an entirely hardware embodiment such as a processor or circuit(s), an entirely software embodiment (including firmware, resident software, micro-code, etc.) or an embodiment combining software and hardware.

The speech signal input part 110 receives a speech signal corresponding to a speech uttered by a user. The speech signal input part 110 may include a microphone and an amplifier for amplifying the received speech. However, receiving of the speech signal in real time by using the microphone is only an exemplary embodiment, and thus the speech signal input part 110 may receive the speech signal through a pre-stored file.

The speech signal segmenter 120 segments the speech signal into a plurality of sections. In detail, the speech signal segmenter 120 may segment the speech signal into the plurality of sections at preset time intervals (e.g., 0.1 second).

The phoneme recognizer 130 recognizes a phoneme of a speech signal of one of the plurality of sections segmented by the speech signal segmenter 120. In detail, the phoneme recognizer 130 may calculate a Gaussian probability distribution of a characteristic vector corresponding to the speech signal of the one section by using a first acoustic model for phoneme recognition and selects an optimum phoneme.

The phoneme recognizer 130 may delete at least a last one of a plurality of phonemes of the speech signal of the one section by using a segmented viterbi algorithm. In detail, since the speech signal segmenter 120 segments the speech signals in units of time, and not in the units of phoneme, the phoneme recognizer 130 may not properly recognize a phoneme positioned in an end part of the one section. Therefore, the phoneme recognizer 130 deletes at least one phoneme positioned in the end part of the one section and outputs the deleted at least one phoneme to the speech signal segmenter 120 to use the deleted at least one phoneme for recognizing a phoneme of a next section.

The candidate word extractor 140 extracts a candidate word of the recognized phoneme by using a phoneme recognition result output from the phoneme recognizer 130. In detail, the candidate word extractor 140 extracts a similar phoneme pronounced similarly to the phoneme output from the phoneme recognizer 130 and generates a word graph of the speech signal of the one section for extracting the candidate word by using the similar phoneme. However, the generation of the word graph of the speech signal of the one section to extract the candidate word is only exemplary, and thus a candidate word list of the speech signal of the one section may be generated. The candidate word extractor 130 outputs the word graph of the speech signal of the one section to the speech recognizer 150.

The speech recognizer 150 performs speech recognition with respect to the speech signal of the one section by using the candidate word extracted by the candidate word extractor 140. In detail, the speech recognizer 150 may search the word graph output from the candidate word extractor 140 for an optimum path of the speech signal of the one section output from the speech signal segmenter 120 to perform the speech recognition.

The phoneme recognizer 130, the candidate word extractor 140, and the speech recognizer 150 may operate in parallel in different cores of a processor or different processors. In other words, if the phoneme recognizer 130 performs phoneme recognition with respect to a speech signal of a first section, the speech recognizer 150 transmits a result of the recognition of the first section to the candidate word extractor 140 and performs phoneme recognition with respect to a speech signal of a second section. The candidate word extractor 140 extracts the candidate word based on the phoneme recognition result of the first section, outputs the extracted candidate word to the speech recognizer 150, and extracts a candidate word by using the phoneme recognition result of the speech recognition of the second section output from the phoneme recognizer 130. The speech recognizer 150 performs the speech recognition with respect to the speech signal of the first section by using the candidate word of the speech signal of the first section extracted by the candidate word extractor 140 and performs the speech recognition with respect to the speech signal of the second section by using the candidate word of the speech signal of the second section extracted by the candidate word extractor 140.

The electronic device 100 described above rapidly performs phoneme recognition with a relatively small number of calculations, extracts a small number of candidate words based on the result of the phoneme recognition, and performs speech recognition by using a noticeably smaller number of candidate words than an existing method of recognizing a plurality of continuous words. Also, the electronic device 100 performs the phoneme recognition, the extraction of the candidate word, and the speech recognition in parallel to allow a user to further rapidly perform speech recognition.

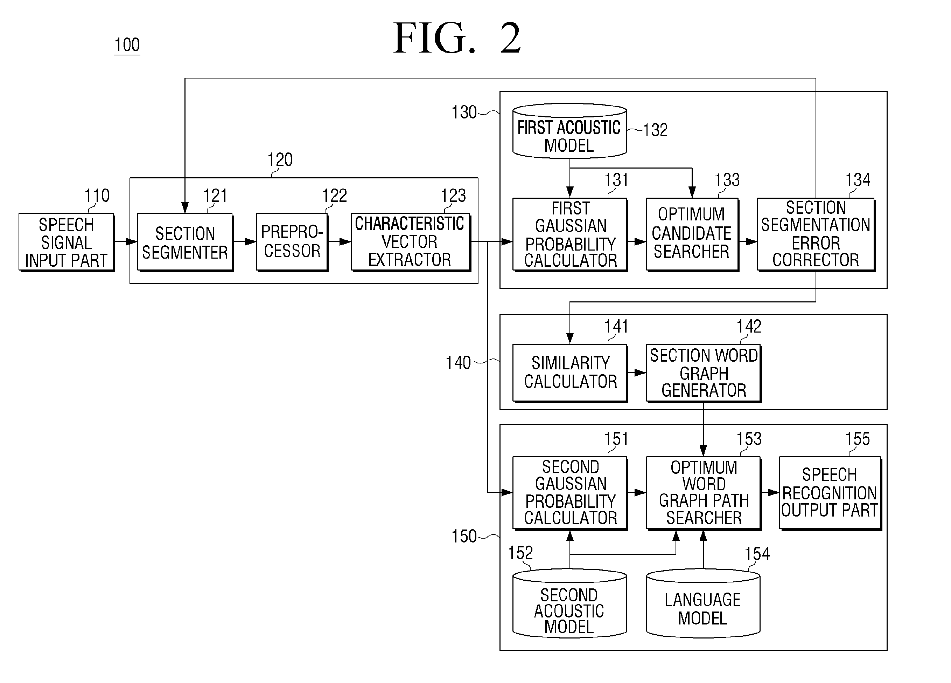

FIG. 2 is a block diagram illustrating a detailed structure of the electronic device 100 for recognizing a speech according to an exemplary embodiment. Referring to FIG. 2, the electronic device 100 includes the speech signal input part 110, the speech signal segmenter 120, the phoneme recognizer 130, the candidate word extractor 140, and the speech recognizer 150.

The speech signal input part 110 receives a speech signal corresponding to a user's speech. The speech signal input part 110 may receive the speech signal in real time from a speech input device such as a microphone. However, this is only an example, and the speech signal input part 110 may receive the speech signal from a file stored in a storage (not shown) of the electronic device 100.

The speech signal segmenter 120 segments the speech signal into a plurality of sections at preset time intervals. Here, the speech signal segmenter 120 includes a section segmenter 121, a preprocessor 122, and a characteristic vector extractor 123.

The section segmenter 121 segments the speech signal output from the speech signal input part 110 at the preset time intervals (e.g., 0.1 seconds).

The preprocessor 122 performs signal-processing, such as noise removal, with respect to a speech signal of one of the plurality of sections.

The characteristic vector extractor 123 extracts a characteristic vector from the speech signal of the one section which is preprocessed. The characteristic vector extractor 123 outputs the characteristic vector of the speech signal of the one section to the phoneme recognizer 130 and the speech recognizer 150.

The phoneme recognizer 130 performs speech recognition by using the characteristic vector extracted by the characteristic vector extractor 123. Here, the phoneme recognizer 130 includes a first Gaussian probability calculator 131, a first acoustic model 132, an optimum candidate searcher 133, and a section segmentation error corrector 134.

The first Gaussian probability calculator 131 calculates a Gaussian probability of the characteristic vector of the speech signal of the one section by using the first acoustic model 132.

The first acoustic model 132 is an acoustic model for phoneme recognition and stores information about 40 to 50 phonemes in the case of Korean language. The first acoustic model 132 may be a hidden Markov model (HMM) acoustic model. In particular, the first acoustic model 132 may be more simply realized than an acoustic model applied to an existing method of recognizing a plurality of continuous words to enable rapid speech recognition.

The optimum candidate searcher 133 selects optimum phonemes included in the speech signal of the one section based on the calculation results of the first acoustic model 132 and the first Gaussian probability calculator 131.

The section segmentation error corrector 134 deletes at least a last one of the plurality of phonemes selected by the optimum candidate searcher 133. In detail, the speech signal segmenter 120 according to the present exemplary embodiment segments the speech signal based on time, and not based on a phoneme. Therefore, all data of the last phonemes of the speech signal of the one section input into the phoneme recognizer 130 may not be input, and thus the at least last one of the plurality of phonemes selected by the optimum candidate searcher 133 may be an incorrectly selected phoneme. Therefore, the section segmentation error corrector 134 deletes the at least last one of the plurality of phonemes selected by the optimum candidate searcher 133 and outputs the phonemes, which are not deleted, to the candidate word extractor 140. The section segmentation error corrector 134 outputs the at least one deleted phoneme to the section segmenter 121 to recognize the at least one deleted phoneme in a next section.

The phoneme recognizer 130 according to the present exemplary embodiment deletes the at least last one of the plurality of phonemes selected by the optimum candidate searcher 133 to correct a section segmentation error through the second segmentation error corrector 134. However, this is only an example, and the phoneme recognizer 130 may search an end part of a phoneme by using a HMM state position check or a signal processing technique to minimize a section segmentation error.

The candidate word extractor 140 extracts a candidate word based on the phoneme of the speech signal of the one section recognized by the phoneme recognizer 130. The candidate word extractor 140 includes a similarity calculator 141 and a section word graph generator 142.

The similarity calculator 141 calculates a pronunciation similarity between the phoneme of the speech signal of the one section and other phonemes by using a pronunciation dictionary to extract a similar phoneme pronounced similarly to the phoneme of the speech signal of the one section.

The section word graph generator 142 generates a section word graph for generating a candidate word based on extracted similar phonemes. Here, the section word graph may be a network type graph on which recognized phonemes are connected to the similar phonemes. The section word graph generator 142 outputs the section word graph for extracting the candidate word of the speech signal of the one section to an optimum word graph path searcher 153.

In the above-described exemplary embodiment, the candidate word extractor 140 generates the section word graph, but this is only exemplary. Therefore, the candidate word extractor 140 may extract candidate words to generate a candidate word list.

The speech recognizer 150 performs speech recognition with respect to one section by using the candidate words output from the candidate word extractor 140. The speech recognizer 150 includes a second Gaussian probability calculator 151, a second acoustic model 152, the optimum word graph path searcher 153, a language model 154, and a speech recognition output part 155.

The second Gaussian probability calculator 151 calculates a Gaussian probability distribution of the speech signal of the one section by using the second acoustic model 152.

Here, the second acoustic model 152 is an acoustic model used in a general method of recognizing a plurality of continuous words and may be an acoustic model using a triphone. In particular, in order to perform a complicated speech recognition, the second acoustic model 152 stores a larger amount of data than the first acoustic model 132.

The optimum word graph path searcher 153 searches for an optimum path corresponding to the speech signal of the section word graph output from the section word graph generator 142 based on the calculation result of the second Gaussian probability calculator 151. Here, the optimum word graph path searcher 153 may perform the speech recognition by using the language model 154 storing a grammar and a sentence structure in order to further accurately recognize a sentence. In other words, the first acoustic model 132 may be an acoustic mode specialized for high-speed speech recognition, and the second acoustic model 152 may be an elaborate acoustic model for improving the performance of a continuous word speech recognition.

The speech recognition output part 155 outputs a word string (a sentence) generated by the optimum path searched by the optimum word graph path searcher 153.

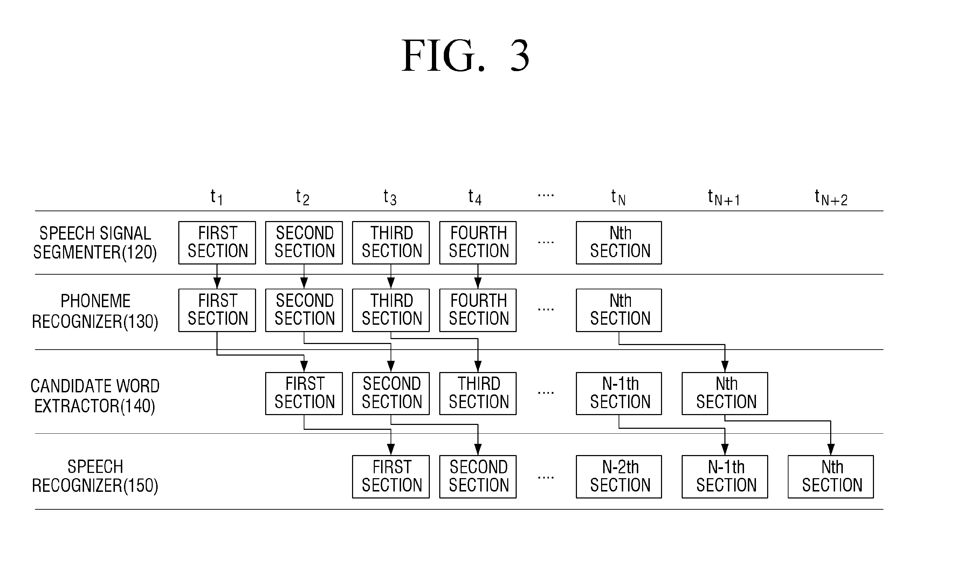

The phoneme recognizer 130, the candidate word extractor 140, and the speech recognizer 150 may be formed in pipeline shapes which operate through different cores in parallel. In detail, as shown in FIG. 3, the speech signal segmenter 120 segments a speech signal into N sections and transmits the speech signals of the N sections to the phoneme recognizer 130. The phoneme recognizer 130 performs phoneme recognition with respect to a first section at a time t1. At a time t2, the phoneme recognizer 130 performs phoneme recognition with respect to a second section, and the candidate word extractor 140 extracts a candidate word of the first section. At a time t3, the phoneme recognizer 130 performs a phoneme recognition with respect to a third section, the candidate word extractor 140 extract a candidate word of the second section, and the speech recognizer 150 performs a speech recognition with respect to the first section. According to this method, the phoneme recognizer 130, the candidate word extractor 140, and the speech recognizer 150 operate in parallel at each time. The speech recognizer 150 performs and outputs speech recognitions with respect to speech signals of all sections after a short time tn+2 -tn from a time when a user ends uttering.

As described above, the electronic device 100 performs a phoneme recognition operation, a candidate word extracting operation using phoneme recognition, and a speech recognition operation using a candidate word in parallel. Therefore, the electronic device 100 performs speech recognition more rapidly than an existing method of recognizing a plurality of continuous words.

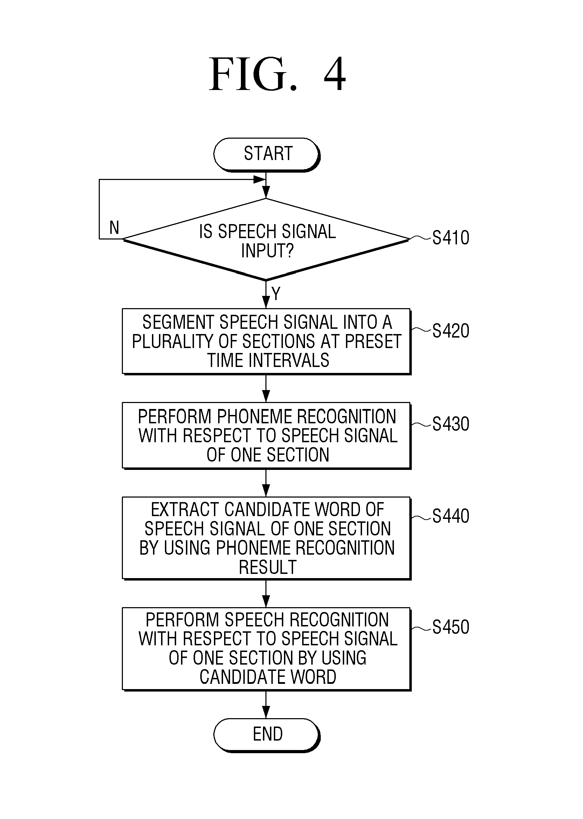

A speech recognition method of the electronic device 100 according to an exemplary embodiment will now be described with reference to FIG. 4.

Referring to FIG. 4, in operation S410, the electronic device 100 determines whether a speech signal is input. The speech signal may be input in real time through a speech input device such as a microphone or through a pre-stored file.

If it is determined in operation S410 that the speech signal is input, the electronic device 100 segments the speech signal into a plurality of sections at preset time intervals in operation S420. In detail, the electronic device 100 segments the input speech signal into the plurality of sections at the preset time intervals (e.g., 0.1 seconds) and performs signal-processing with respect to a speech signal of one of the plurality of sections to extract a characteristic vector.

In operation S430, the electronic device 100 recognizes a phoneme of the speech signal of the one section. In detail, the electronic device 100 recognizes the phoneme of the speech signal of the one section by using a first acoustic model. In order to further accurately recognize the phoneme, the electronic device 100 deletes at least one last phoneme of a plurality of recognized phonemes and uses the at least one deleted phoneme to recognize a phoneme of a speech signal of a next section.

In operation S440, the electronic device 100 extracts a candidate word of the speech signal of the one section by using the phoneme recognition result. In detail, the electronic device 100 extracts similar phonemes of the plurality of recognized phonemes and generates a word graph for extracting the candidate word. Here, the word graph is a network type graph on which the recognized phonemes are respectively connected to the similar phonemes.

In operation S450, the electronic device 100 performs speech recognition with respect to the speech signal of the one section by using the candidate word. In detail, the electronic device 100 performs speech recognition with respect to the speech signal of the one section by using a second acoustic model and a language model of the candidate word (the word graph) extracted in operation S440.

The electronic device 100 may repeatedly perform operations S430 through S450 with respect to speech signals of next sections. The electronic device 100 may repeatedly perform operations S430 through S450 in parallel by using different cores of a processor.

As described above, according to the speech recognition method, an electronic device may more rapidly and accurately perform speech recognition than an existing method of recognizing a plurality of continuous words.

As will be appreciated by one skilled in the art, aspects of the exemplary embodiments may be embodied as an apparatus, system, method or computer program product. Accordingly, aspects of the exemplary embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the exemplary embodiments may take the form of a computer program product embodied in one or more computer readable medium(s) having computer readable program code embodied thereon, and executed by a hardware processor.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

The foregoing exemplary embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of recognizing speech in an electronic device, the method comprising:
if a speech signal is input, segmenting the speech signal into a plurality of sections at preset time intervals;
performing phoneme recognition with respect to a speech signal of one of the plurality of sections by using a first acoustic model;
extracting a candidate word of the speech signal of the one section by using the phoneme recognition result; and
performing speech recognition with respect to the speech signal of the one section by using the candidate word.

2. The method of claim 1, wherein the performing of the phoneme recognition further comprises:
deleting at least one last phoneme of a plurality of phonemes of the speech signal of the one section by using a segmented viterbi algorithm,
wherein the at least one deleted phoneme is used to perform phoneme recognition with respect to a speech signal of a next section.

3. The method of claim 1 or 2, wherein the extracting comprises:
extracting a similar phoneme pronounced similarly to the recognized phoneme; and
generating a word graph for extracting the candidate word of the one section by using the recognized phoneme and the similar phoneme.

4. The method of claim 3, wherein the performing of the speech recognition comprises:
calculating a Gaussian probability of the speech signal of the one section by using a second acoustic model; and
outputting a word string having a highest probability in the word graph by using the second acoustic model and a language model.

5. The method of claim 4, wherein the first and second acoustic models are different from each other.

6. The method of any one of claims 1 through 5, wherein the performing of the phoneme recognition, the extracting, and the performing of the speech recognition are performed in parallel through different cores.

7. An electronic device comprising:
a speech signal input part which receives a speech signal;
a speech signal segmenter which segments the speech signal input through the speech signal input part into a plurality of sections at preset time intervals;
a phoneme recognizer which performs phoneme recognition with respect to a speech signal of one of the plurality of sections by using a first acoustic model;
a candidate word extractor which extracts a candidate word of the speech signal of the one section by using the phoneme recognition result; and
a speech recognizer which performs speech recognition with respect to the speech signal of the one section by using the candidate word.

8. The electronic device of claim 7, wherein the phoneme recognizer deletes at least one last phoneme of a plurality of phonemes of the speech signal of the one section by using a segmented viterbi algorithm to perform the phoneme recognition,
wherein the at least one deleted phoneme is used to perform phoneme recognition with respect to a speech signal of a next section.

9. The electronic device of claim 7 or 8, wherein the candidate word extractor extracts a similar phoneme pronounced similarly to the recognized phoneme and generates a word graph for extracting a candidate word of the section by using the recognized phoneme and the similar phoneme.

10. The electronic device of claim 9, wherein the speech recognizer calculates a Gaussian probability of the speech signal of the one section by using a second acoustic model and outputs a word string having a highest probability in the word graph by using the second acoustic model and a language model to perform the speech recognition.

11. The electronic device of claim 10, wherein the first acoustic model of the phoneme recognizer and the second acoustic model of the speech recognizer are different from each other.

12. The electronic device of any one of claims 7 through 11, wherein the phoneme recognizer, the candidate word extractor, and the speech recognizer are realized as different cores.
